# EUROPEAN PATENT SPECIFICATION

(11) **EP 1 147 408 B1**
(45) Date of publication and mention of the grant of the patent: **27.12.2006**
(21) Application number: 99920025.6
(22) Date of filing: 26.04.1999
(51) Int. Cl.: G01N 27/00, G01N 27/20

(54) **CONDOM TESTING APPARATUS**
VORRICHTUNG ZUR PRÜFUNG VON KONDOMEN
APPAREIL DE TEST DE PRESERVATIFS

(30) Priority: 06.01.1999 US 226753
(43) Date of publication of application: 24.10.2001
(73) Proprietor: Agri Dynamics, Inc., dba Industrial Manufacturing, Albany, GA 31705 (US)
(72) Inventor: UNDERWOOD, Daniel, S., Albany, GA 31705 (US); BASS, Barry, W., Albany, GA 31707 (US)
(74) Representative: Cummings, Sean Patrick
(86) International application number: PCT/US1999/008999
(87) International publication number: WO 2000/040954

(56) References cited:
- DE-A- 1 927 390
- DE-B- 1 169 159
- US-A- 2 320 516
- US-A- 2 609 094
- US-A- 2 649 960

## Description

### BACKGROUND OF THE INVENTION

The invention relates generally to the field of condom testing equipment, and more particularly to such equipment which utilizes anelectric arc to identify defective condoms.

By virtue of their intended use, it is absolutely essential that condoms provide a complete and impermeable barrier. Minute holes undetectable under visual inspection and excessively thin spots in the condom wall likely to fail in use are unacceptable. Because the manufacturing process produces huge numbers of condoms at a high rate and because the material of construction is purposely very thin and elastic, there is always likely to be a relatively small number of defective products in any production run. Because of this, every condom must be tested prior to packaging and distribution for sale to insure that no defective condoms are supplied to consumers.

One technique for testing a condom involves placing the condom on an electrically conductive mandrel, immersing the condom in water containing an electrical lead and then attempting to pass a current through the water to the mandrel. The condom material acts as an insulating barrier between the water and the mandrel to prevent completion of the electrical circuit, but any hole in the condom will allow the circuit to be completed, indicating that the condom is defective. Advantages of this technique are that low electrical voltages are required and the use of water as a conductive medium provides full contact to all portions of the condom. The major drawback to this technique is that the condoms must be dried prior to packaging. Another drawback is that the technique does not provide an indication of excessively thin spots in the condom wall which may tear in use, since the thin material is still sufficient to prevent passage of current from the water to the mandrel. A second known testing technique is to replace the conductive water with a conductive mesh material, the mesh being constructed so as to be very non-rigid so that it closely drapes against the condom on the conductive mandrel. The mandrel and condom are rotated while contacting the electrified mesh, and again any defects will allow the current to pass through the condom to the mandrel. A problem with this technique is that because the mesh must have a large amount of open area to achieve the desired flexibility, direct contact against every portion of the condom is not achieved, so a relatively high and thus dangerous amount of electrical current must be used - typically greater than 50 watts - to try to insure that the current will arc from the mandrel through a defect to the nearest piece of mesh. The variation in distance from the condom to particular points on the mesh as the condom is moved past the mesh also makes proper calibration of the electrical current difficult. Another problem is caused by the nipple portion of the condom. Because of this change in configuration from the generally cylindrical main body portion of the condom, providing enough contact between the mesh and the nipple material is problematic and defects can be missed.

U.S. Patent No. 2,320,516 discloses a condom testing apparatus that tests a condom mounted onto an electrically conductive mandrel by loosely draping an electrically conductive fabric member onto the condom. The fabric member contacts the entire condom including the nipple end. Any current that passes between the mandrel and the fabric member indicates a defective condom.

German Patent No. 1,169,159 discloses a condom testing apparatus that tests a condom mounted onto an electrically conductive mandrel by providing an electrically conductive brush member that contacts the condom. The surface of the brush member is configured to match the shape of the mandrel. Any current passing between the mandrel and brush member indicates a defective condom.

It is an object of this invention to provide a highly efficient and accurate condom testing apparatus which overcomes the problems in the current testing equipment by providing for full contact over every portion of the condom, including the nipple area, so that an electric current can be used to detect any and every defect in the condom, including a defect consisting of an excessively thin wall portion which may fail during use, without requiring excessive preparation or post-testing steps in the testing process. These objects, as well as other objects which will be apparent from the description to follow, are accomplished preferably by providing an apparatus having an electrically conducting sheet fabric member for contacting the generally cylindrical portion of the condom on the mandrel and an electrically conducting brush member for contacting the nipple portion of the condom on the mandrel.

### SUMMARY OF THE INVENTION

In general the invention comprises a condom testing apparatus which has means to transport a condom loaded onto an electrically conductive testing mandrel through electrically conductive condom contacting means, with the mandrel and condom contacting means connected in a gapped electrical circuit such that the condom acts as an electrical insulator to prevent completion of the circuit, but where the electrical current will arc between or through any defect in the condom, such as a hole or excessively thin area in the condom wall, to complete the circuit, thus indicating that the condom is defective. The mandrel is shaped to correspond to the condom shape, including the nipple portion. The condom contacting means preferably comprises an electrically conductive fabric member and an electrically conductive brush member. For the combination fabric and brush assembly, the fabric member is positioned to contact the generally cylindrical main body portion of the contact as it is brought across the fabric member. Preferably the fabric is backed by compressible padding such that the condom and mandrel, which is constructed to rotate freely during this testing stage, is rotated by frictional contact with the fabric member as it is moved through the condom contacting means. The fabric member is sufficiently long such that the condom is tested over 360 degrees, and preferably is provided excessively long such that more than one revolution of the condom is achieved during the test. The fabric member and pad is preferably constructed with a raised shoulder along the end corresponding to the nipple portion of the condom, so that the shoulder between the main body and the nipple, as well as the major portion of the nipple having a generally cylindrical configuration, are contacted. The fabric member is not positioned to contact the far end of the nipple portion, as the friction from the rotational movement would twist and damage the condom. The brush member is positioned along the nipple portion, preferably at an angle to the central axis of the rotating mandrel, in order to contact the extreme end of the nipple portion. In this manner every point of the condom is in direct contact with either the conductive fabric member or the conductive brush member, such that the electrical current will complete the circuit through any minute hole in the condom to indicate a defective condom. Furthermore, because the contact between the condom and both the fabric member and brush member is so extensive, and because the fabric member and brush member are positioned relatively close to the mandrel and at a relatively constant distance, the current strength can be adjusted such that the circuit will be completed even through excessively thin-walled areas of the condom, thus indicating a defective condom even where a hole is not present initially.

### BRIEF DESCRIPTION OF THE DRAWINGS

Figure 1 is an end view of the invention comprising the combination of conductive sheet member and conductive brush member, showing the nipple end of the mandrel and condom as it initially contacts the condom contacting means.
Figure 2 is a side view of the invention comprising the combination of conductive sheet member and conductive brush member, with a portion of the brush member removed to expose the mandrel and condom during the mid-portion of the testing operation.
Figure 3 is a top view of the fabric member only of the invention comprising the combination of conductive sheet member and conductive brush member, with the brush member removed to show the mandrel and condom during the mid-portion of the testing operation.

### DETAILED DESCRIPTION OF THE INVENTION

With reference to the drawings, the invention will now be described in detail with regard for the best mode and the preferred embodiment. In general, the invention is an apparatus for testing condoms for defects, including holes and excessively thin wall areas, prior to packaging and distribution. The apparatus is preferably part of condom handling equipment having a mandrel to receive a condom in the unrolled condition, means to apply the condom to the mandrel prior to testing and means to remove the condom from the mandrel after testing, whether manually or mechanically, and means to transport the loaded mandrel through the condom testing apparatus as described. Such condom handling equipment is well known in the industry, and a representative example may be seen in U.S. Patent No. 5,499,898 issued to Vonier et al. The mandrels are connected to transport mechanisms which move the mandrel laterally relative to the longitudinal axis, with the mandrels being fixed, rotatable by power means or freely rotatable dependent on the particular individual operation required to be performed.

A condom 90 is composed of a thin, elastic material, typically a latex rubber, and is configured to have a generally cylindrical or tubular, open-ended, main body portion 91, a transition portion 92 where the diameter of the condom 90 is reduced - rapidly at first, then minimally for a short distance along the longitudinal axis, and finally rapidly again - to form a closed nipple end 93. The condom 90 material of construction is an electrical insulator, in that an electrical current at a level below the insulating threshold will not pass through the condom wall. For packaging, the main body portion 91 of the condom 90 is rolled along the central axis toward the nipple end. The testing mandrel 80 consists of a generally cylindrical body which is shaped to correspond to the overall shape of the condom 90, having a generally cylindrical main body, a transition region and reduced diameter end. The mandrel 80 is composed of an electrically conductive material, preferably a metal, and is connected to an electrical circuit. The mandrel 80 is connected to a mandrel transport means (shown representatively as 100) capable of moving the mandrel 80 laterally through the condom contacting means 10 for testing, the transport means 100 being of any type suitable for a moving the mandrel 80 in the necessary direction. The mandrel 80 is connected to the transport means 100 in a manner which allows free or controlled rotation of the mandrel 80 about the central axis, such as may be accomplished using bearings or the like in known manner.

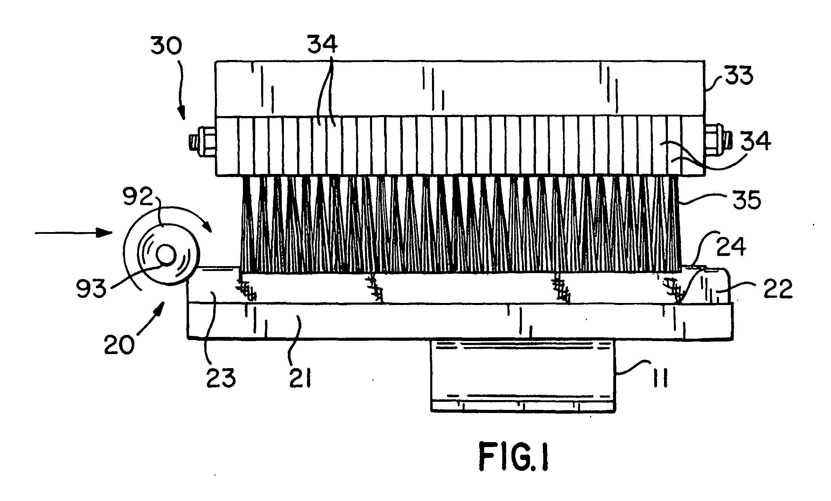

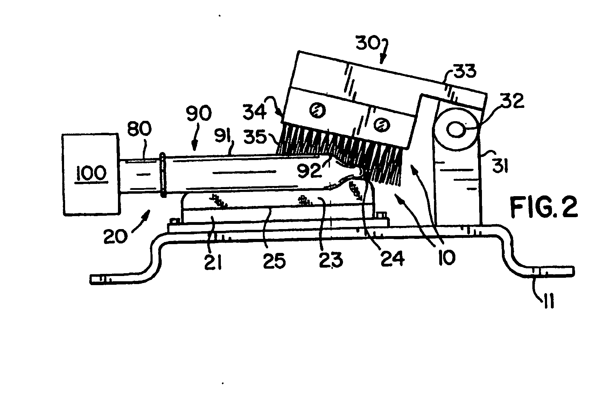

The mandrel 80 loaded with a condom 90 for testing is translated through or across the condom contacting means 10, as shown in Figures 1 and 2. Condom contacting means 10 comprises a condom body contacting means 20 and a condom nipple contacting means 30, where the condom body contacting means 20 contacts the main body portion 91 and the transition portion 92 of the condom 90 and where the condom nipple contacting means 30 contacts the nipple end 93 and preferably the transition portion 92 of the condom 90 as the condom 90 and mandrel 80 are transported laterally through the condom contacting means 10. The condom contacting means 10 is provided with a mounting means such as base plate 10 to secure the assembly in a fixed manner relative to the condom transport means 100.

The body contacting portion 20 of the condom contacting means 10 comprises an electrically conductive fabric or sheet material member 23, which is preferably a durable fabric with some flexibility and a generally smooth surface to reduce friction and wear, preferably mounted onto a compressible backing pad 22 made of a polymer foam or a rubber, with the combination connected to a pad mount plate 21 or connected directly to the base plate 11. A suitable fabric member 23, for example, is a conductive sheeting sold by Aldan Industries consisting of a double coated, electrically conductive polyurethane on filament nylon, or an electrically conductive butyl rubber on spun polyester, sold as item numbers JB1S9B22 and JC159B25, respectively. The fabric member 23 and backing pad 22 is generally rectangular in shape, sufficiently long so as to contact the majority of the condom main body portion 91 when it is transported across the body contacting means 20 and with a width at least as great as the outer circumference of the condom main body portion 91, such that a full rotation of the condom 90 on the mandrel 80 results in contact to the fabric member 23 over the full circumference of the condom 90. Preferably, the fabric member 23 is wide enough to provide for at least 2.5 revolutions of the condom main body portion 91 while in contact with the fabric member 23, thus reducing even further the minimal chance that a defect might be missed in the test.

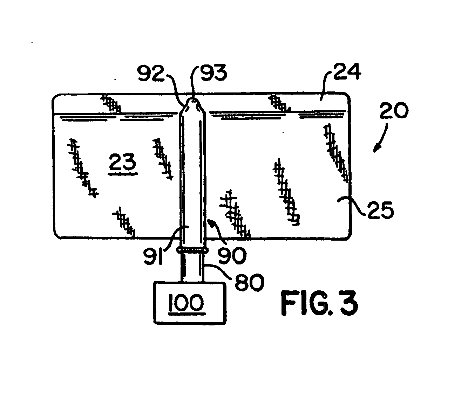

As best seen in Figures 2 and 3, the backing pad 22 and fabric member 23 of the body contacting means 20 is configured to have a generally planar surface 25 extending across the majority of the surface which contacts the condom main body portion 91, and a raised shoulder portion 24 disposed at the end of the mandrel 80, where the raised shoulder portion 24 generally conforms to the shape of the mandrel 80 and condom 90 in the transition portion 92. With this shape, the fabric member 23 contacts both the condom main body 91 and the condom transition portion 92 as the condom 90 and mandrel 80 are transported through the condom contacting means 10.

The nipple contacting means 30 comprises one or a plurality of electrically conductive brushes 34 having relatively dense bristle members 35 for direct contact with the condom 90, and means to mount the brushes 34 which as shown comprises a mounting post 31 connected to base plate 11, a brush mounting plate 33 and preferably pivot means 32 to connect the mounting plate 33 to the mounting post 31 such that the angle of the brushes 34 relative to the fabric member 23 can be adjusted as required. The contacting bristles 35 must occupy an area having a width in the mandrel transport direction at least equal to the circumference of the condom main body portion 91, and preferably occupy a width equal in distance to twice the circumference, such that contact will be maintained over two revolutions of the condom 90 as it is transported through the condom contacting means 10. The area covered by the bristles 35 should extend lengthwise in the mandrel axial direction at least slightly beyond the condom nipple end 93 and at least slightly beyond the condom transition portion 92, although it is possible to be shorter in this direction. The bristles 35 may be of generally equal length so as to present a generally planar contact surface, or they may be contoured to correspond to the shape of the loaded condom 90. In order to maximize contact along the condom nipple end 93 during testing, the brushes 35 are preferably mounted at an angle such that the bristle 35 ends are generally parallel to a line tangent to the nipple end 93 and the junction of the main body 91 and transition portion 92. The bristles 35 must extend to and preferably slightly beyond the axis of the condom nipple end 93, as the primary responsibility of the bristles 35 is to test the condom nipple end 93 for defects. Bristles 35 are used in order to provide contacting members which create minimal friction against the nipple end 93, such that rotation of the condom 90 as it passes through the bristles 35 does not produce excessive friction resulting in twisting and damage to the condom nipple end 93. The brush member 35 may be formed as a single body or formed of multiple individual brushes 35 joined in series. A suitable brush 35 for this purpose is a brush made by the Mill-Rose Company composed of a conductive plastic block and conductive bristles sold under the brand name THUNDERON.

The mandrel 80, fabric member 23 and the electrically conductive bristles 35 of the testing brush 34 are connected in an electrical circuit of common type used in such testing equipment, which is not shown in the drawings, such that when a mandrel 80 is passed through the condom contacting means 10, the circuit will be completed except for the insulation provided by the condom 90. An operating voltage in the range of 800 to 1800 vDC and operating current in the range of .006 to .010 amps has been found suitable for testing purposes. In particular such parameters are desirable in that the apparatus will not only detect holes in the condom 90, but the power is sufficient to jump gaps of approximately 0.076 mm (3/1000 inches) even through the condom wall, meaning that the current will arc or burn through excessively thin areas in the condom material, thus indicating a defective condom 90 even where a hole is not present. When the current passes through a hole or an excessively thin area between the mandrel 80 and either the fabric member 23 or the bristles 35, the circuit is completed and the condom 90 is noted as defective in further handling.

As shown in Figure 1, the electrically conductive fabric member 23 may extend slightly beyond both edges of the electrically conductive bristles 35 along the transport direction of the mandrel 80. With this construction, the mandrel 80 and condom 90 will first contact the fabric member 23, which is disposed such that the compressive pad 22 is slightly compressed so that sufficient friction occurs to cause the mandrel 80 to rotate as it is moved along the fabric member 23, which prevents the condom material being dragged across the surface of the fabric member 23. It is desirable that the fabric member 23 be contacted first, since in the instances where a condom 90 is not loaded onto the mandrel 80, the current will arc between the fabric member 23 and the mandrel 80 rather than between the mandrel 80 and the bristles 35, which deteriorates the ends of the bristles 35. It is preferred, however, to solve the arcing problem by the incorporation of appropriate circuitry. As the transport means 100 moves the mandrel 80 laterally through the condom contacting means 10, the condom 90 is rotated such that the entire circumference of the condom main body 91 and transition portion 92 contacts the fabric member 23, and such that the entire circumference and end of the condom nipple end 93 and the transition portion 92 contacts the bristles 35, such that every existing or potential defect in the condom 90 will be detected.

It is contemplated that equivalents and substitutions for certain elements and components set forth above may be obvious to those skilled in the art, and thus the true scope and definition of the invention is to be as set forth in the following claims.

## Claims

1. A condom testing apparatus for identifying defective condoms (90) having holes or excessively thin wall areas by passage of an electrical current through such defect, the apparatus comprising an electrically conductive mandrel (80) to receive a condom (90) having a cylindrical body portion (91), a transition portion (92) and a nipple end (93), where said mandrel (80) is connected to mandrel transport means (100) to move said mandrel (80) across condom contacting means (10); where said mandrel (80) and said condom contacting means (10) are connected in a gapped electrical circuit such that an electric current passes through any defects in a condom (90) mounted onto said mandrel (80) to indicate that the condom (90) is defective;
**characterized by** said condom contacting means (10) comprising condom body contacting means (20) comprising an electrically conductive, flexible sheet member (23) and condom nipple contacting means (30) comprising an electrically conductive brush member (34), where said condom body contacting means (20) does not contact said nipple end (93) of said condom (90).

2. The apparatus of claim 1, where said condom body contacting means (20) further comprises a compressible backing pad (22) and said sheet member (23) is affixed to said backing pad (22), where said mandrel (80) rotates as said mandrel (80) is moved across said sheet member (23) of said condom contacting means (10).

3. The apparatus of claim 2, where said rotation is caused by frictional contact between said condom (90) on said mandrel (80) and said sheet member (23).

4. The apparatus of claim 2, where said backing pad (22) has a raised shoulder (24) corresponding to said transitional portion(92) of said condom (90), whereby said transition portion (92) of said condom (90) contacts said shoulder (24) of said backing pad (22) when said mandrel (80) is moved across said sheet member (23) of said condom contacting means (10).

5. The apparatus of claim 4, where said mandrel (80) and said condom (90) contacting said sheet member (23) before contacting said brush member (34).

## Patentansprüche

1. Vorrichtung zur Prüfung von Kondomen, um fehlerhafte Kondome (90) mit Löchern oder extrem dünnen Wandbereichen mit Hilfe des Durchtritts eines elektrischen Stroms durch eine solche schadhafte Stelle hindurch feststellen zu können, wobei die Vorrichtung einen elektrisch leitenden Dorn (80) zur Aufnahme eines Kondoms (90) mit einem zylindrischen Körper-Teil (91), einem Übergangsteil (92) und einem Nippelende (93) aufweist, worin der Dorn (80) mit einem Dorntransportmittel (100) verbunden ist, um den Dorn (80) durch ein Kondom-Kontaktierungsmittel (10) hindurch zu bewegen, worin der Dorn (80) und das Kondom-Kontaktierungsmittel (10) über einen einen Spalt aufweisenden elektrischen Stromkreis miteinander verbunden sind, derart, dass ein elektrischer Strom durch möglicherweise vorhandene schadhafte Stellen in einem auf den Dorn (80) aufgezogenen Kondom (90) hindurchtritt, um anzuzeigen, dass das Kondom (90) schadhaft ist;
**dadurch gekennzeichnet, dass** das genannte Kondom-Kontaktierungsmittel (10) ein Mittel (20) zum Kontaktieren des Kondom-Körpers mit einem elektrisch leitenden, biegsamen flächigen Element (23) und ein Mittel (30) zum Kontaktieren des Kondom-Nippels mit einem elektrisch leitenden Bürstenelement (34) aufweist, worin das Mittel (20) zum Kontaktieren des Kondom-Körpers das Nippelende (93) des Kondoms (90) nicht berührt.

2. Vorrichtung nach Anspruch 1, worin das Mittel (20) zum Kontaktieren des Kondom-Körpers weiterhin eine komprimierbare Unterlage (22) aufweist und das flächige Element (23) an der Unterlage (22) befestigt ist, wobei sich der Dorn (80) dreht, wenn der Dorn (80) durch das flächige Element (23) des Kondom-Kontaktierungsmittels (10) hindurch bewegt wird.

3. Vorrichtung nach Anspruch 2, worin die genannte Drehung durch einen Reibkontakt zwischen dem Kondom (90) auf dem Dorn (80) und dem flächigen Element (23) verursacht wird.

4. Vorrichtung nach Anspruch 2, worin die Unterlage (22) eine erhöhte Schulter (24) aufweist, die dem Übergangsteil (92) des Kondoms (90) entspricht, wobei der Übergangsteil (92) des Kondoms (90) mit der genannten Schulter (24) der Unterlage (22) in Kontakt kommt, wenn der Dorn (80) durch das flächige Element (23) des Kondom-Kontaktierungsmittels (10) hindurchbewegt wird.

5. Vorrichtung nach Anspruch 4, worin der Dorn (80) und das Kondom (90) mit dem flächigen Element (23) in Kontakt kommen, bevor sie mit dem Bürstenelement (34) in Kontakt kommen.

## Revendications

1. Appareil de test de préservatif destiné à identifier des préservatifs défectueux (90) comprenant des trous ou des surfaces de paroi excessivement fines par le passage d'un courant électrique au travers de ce défaut, ledit appareil comprenant un mandrin conducteur d'électricité (80) destiné à recevoir un préservatif (90) comprenant une partie de corps cylindrique (91), une partie de transition (92) et une extrémité de mamelon (93), dans lequel ledit mandrin (80) est raccordé à un moyen de transport de mandrin (100) pour déplacer ledit mandrin (80) sur des moyens de contact de préservatif (10) ; dans lequel ledit mandrin (80) et ledit moyen de contact de préservatif (10) sont raccordés dans un circuit électrique espacé de telle sorte qu'un courant électrique traverse un défaut quelconque dans un préservatif (90) monté sur ledit mandrin (80) pour indiquer que le préservatif (90) est défectueux ;
**caractérisé en ce que** ledit moyen de contact de préservatif (10) comprend un moyen de contact de corps de préservatif (20) comprenant un élément de feuille souple et conducteur d'électricité (23) et un moyen de contact de mamelon de préservatif (30) comprenant un élément de brosse conducteur d'électricité (34), dans lequel ledit moyen de contact de corps de préservatif (20) n'entre pas en contact avec ladite extrémité de mamelon (93) dudit préservatif (90).

2. Appareil selon la revendication 1, dans lequel ledit moyen de contact de corps de préservatif (20) comprend également une plaque de presse compressible (22) et ledit élément de feuille (23) est fixé à ladite plaque de presse (22), dans lequel ledit mandrin (80) tourne quand ledit mandrin (80) est déplacé sur ledit élément de feuille (23) dudit moyen de contact de préservatif (10).

3. Appareil selon la revendication 2, dans lequel ladite rotation est causée par un contact par friction entre ledit préservatif (90) sur ledit mandrin (80) et ledit élément de feuille (23).

4. Appareil selon la revendication 2, dans lequel ladite plaque de presse (22) comprend un épaulement relevé (24) qui correspond à ladite partie de transition (92) dudit préservatif (90), moyennant quoi ladite partie de transition (92) dudit préservatif (90) entre en contact avec ledit épaulement (24) de ladite plaque de presse (22) quand ledit mandrin (80) est déplacé sur ledit élément de feuille (23) dudit moyen de contact de préservatif (10).

5. Appareil selon la revendication 4, dans lequel ledit mandrin (80) et ledit préservatif (90) entrent en contact avec ledit élément de feuille (23) avant d'entrer en contact avec ledit élément de brosse (34).
